# EUROPÄISCHE PATENTSCHRIFT

(11) **EP 2 492 555 B1**
(45) Veröffentlichungstag und Bekanntmachung des Hinweises auf die Patenterteilung: **24.01.2018**
(21) Anmeldenummer: 11001557.5
(22) Anmeldetag: 25.02.2011
(51) Int. Cl.: F16K 11/074, E03C 1/04

(54) **Einhebelmischarmatur mit Boosterfunktion**
Single lever mix fitting with booster function
Mitigeur monocommande avec fonction booster

(43) Veröffentlichungstag der Anmeldung: 29.08.2012
(73) Patentinhaber: Franke Water Systems AG, 5726 Unterkulm (CH)
(72) Erfinder: Brunner, Stefan, 5054 Moosleerau (CH); Lehner, Michael, 5722 Gränichen (CH)
(74) Vertreter: Lemcke, Brommer & Partner Patentanwälte Partnerschaft mbB

(56) Entgegenhaltungen:
- EP-A1- 0 117 188
- EP-A1- 0 653 581
- EP-A2- 2 107 282
- EP-A2- 2 146 123
- DE-A1- 3 128 968
- US-A- 4 431 028

## Beschreibung

Die vorliegende Erfindung betrifft eine Einhebelmischarmatur gemäss Patentanspruch 1.

Eine Einhebelmischarmatur mit einer Mischerpatrone mit einer ersten und einer zweiten Mischwasserabflussöffnung sowie einer Kaltwasserzuflussöffnung und einer Warmwasserzuflussöffnung ist bekannt und in der älteren europäischen Patentanmeldung mit der Nummer EP 10 014 489.9 offenbart. Die Offenbarung dieser Druckschrift ist hiermit in die vorliegende Anmeldung aufgenommen. Es ist eine Einhebelmischarmatur beschrieben, bei der das von der Mischerpatrone abfliessende Mischwasser einerseits, beim Drehen des Bedienhebels ausgehend von einer Ruhestellung in einem ersten Einstellbereich, direkt in den Wasserauslauf fliesst und andererseits, beim Drehen des Bedienhebels ausgehend von der Ruhestellung - in entgegengesetzter Richtung - in einem zweiten Einstellbereich, über einen Durchlauferhitzer in den Wasserauslauf fliesst. Im Durchlauferhitzer wird das Wasser erwärmt. Dadurch ist es möglich, die Temperatur des Warmwassers im Netz vergleichsweise tief zu halten und bei Bedarf das Wasser über den Durchlauferhitzer umzuleiten, dort zu erwärmen und somit eine höhere Wassertemperatur des aus dem Wasserauslauf austretenden Wassers bereitzustellen.

Aus der EP 2,107,282 A2 ist der Aufbau einer Mischerpatrone, wie sie bei einer im vorangehenden Abschnitt beschriebenen Einhebelmischarmatur zum Einsatz kommen kann, sowie deren Funktionsweise und bevorzugte Verwendung beschrieben. Die Mischerpatrone weist eine Warmwasserzuflussöffnung, eine Kaltwasserzuflussöffnung und eine erste und eine zweite Mischwasserabflussöffnung auf. Das der Mischerpatrone zugeführte Warm- und Kaltwasser wird in der Mischerpatrone gemischt. Je nach Stellung des Stellhebels, in einem ersten Einstellbereich oder in einem zweiten Einstellbereich, wird dieses Mischwasser entweder der ersten oder der zweiten Mischwasserabflussöffnung zugeführt. Die erste Mischwasserabflussöffnung ist vorzugsweise mit einem Auslauf zum Füllen einer Badewanne strömungsverbunden. Die zweite Mischwasserabflussöffnung ist vorzugsweise mit einer Duschbrause strömungsverbunden. Wenn der Stellhebel, ausgehend von einer Ruhestellung, in Richtung des ersten Einstellbereichs bewegt wird, tritt Mischwasser aus der ersten Mischwasserabflussöffnung aus, fliesst in den Auslauf, der zum Füllen der Badewanne verwendet wird, und tritt dort aus. Die Temperatur und der Durchfluss des austretenden Mischwassers sind in diesem ersten Einstellbereich, durch Drehen des Stellhebels um eine Drehachse und Verschwenken des Stellhebels um eine zur Drehachse rechtwinklig verlaufende Schwenkachse, einstellbar. Wenn der Stellhebel, ausgehend von der Ruhestellung, in entgegengesetzter Richtung bezüglich des ersten Einstellbereichs, in den zweiten Einstellbereichs bewegt wird, tritt Mischwasser aus der zweiten Mischwasserabflussöffnung aus, fliesst in die Duschbrause und tritt dort aus. Die Temperatur des austretenden Mischwassers ist in diesem zweiten Einstellbereich frei wählbar, jedoch ist der Durchfluss konstant.

Eine ähnliche Einhebelmischapparatur wird in der EP 2 146 123 A2 offenbart. Diese Einhebelmischapparatur umfasst eine Kartusche mit einer ersten Mischwasserauslauföffnung, welche mit einem in eine Badewanne mündenden Wasserauslauf strömungsverbunden ist, und eine zweite Mischwasserauslauföffnung, welche mit einer Duschbrause strömungsverbunden ist. Die Kartusche lässt sich über einen Bedienhebel steuern.

Es ist denkbar, die erste und die zweite Mischwasserabflussöffnung der Einhebelmischarmatur beziehungsweise der Mischerpatrone, auch für einen anderen Zweck, als für das Zubringen des Mischwassers oder Wassers einerseits zu einem Auslauf der in eine Badewanne beziehungsweise in eine Duschbrause oder andererseits in einen Durchlauferhitzer mündet, zu verwenden.

Ausgehend von diesem Hintergrund liegt der vorliegenden Erfindung die Aufgabe zugrunde, eine Einhebelmischarmatur zur Verfügung zu stellen, mit welcher Wasser eingespart werden kann und die es gleichzeitig ermöglicht, bei Bedarf, die grösstmögliche Wassermenge beziehungsweise den Maximaldurchfluss freizugeben.

Diese Aufgabe wird mit einer Einhebelmischarmatur gemäss dem Anspruch 1 gelöst.

Die Einhebelmischarmatur weist ein Armaturengehäuse und eine im Armaturengehäuse eingesetzte, mittels eines Bedienhebels, welcher ausgehend von einer Ruhestellung in Richtung eines ersten Einstellbereichs und entgegengesetzt in Richtung eines zweiten Einstellbereichs um eine Drehachse drehbar ist, steuerbare Mischerpatrone, auf. Die Mischerpatrone weist eine Warmwasserzuflussöffnung, an die eine Warmwasserleitung anschliessbar ist, eine Kaltwasserzuflussöffnung, an die eine Kaltwasserleitung anschliessbar ist, eine mit einem Wasserauslauf strömungsverbundene Mischwasserabflussöffnung und eine mit dem Wasserauslauf strömungsverbundene Abflussöffnung auf. Beim Drehen des Bedienhebels im ersten Einstellbereich wird Mischwasser über die Mischwasserabflussöffnung abgegeben. Beim Drehen des Bedienhebels im zweiten Einstellbereich wird Wasser über die Abflussöffnung abgegeben. Weiter kann beim Drehen des Bedienhebels im zweiten Einstellbereich der Durchfluss des durch die Abflussöffnung fliessenden Wassers bis zu einem Maximaldurchfluss reguliert werden. Beim Drehen des Bedienhebels im ersten Einstellbereich ist der Höchstdurchfluss des durch die Mischwasserabflussöffnung in den Wasserauslauf fliessenden Mischwassers, gegenüber dem Maximaldurchfluss, reduziert.

Dieser erfindungsgemässe Aufbau der Einhebelmischarmatur erlaubt es, im ersten Einstellbereich, welcher mehrheitlich verwendet wird, einen gegenüber dem Maximaldurchfluss reduzierten Höchstdurchfluss bereitzustellen. Dies hat den Effekt, dass Wasser eingespart werden kann.

Beispielsweise wird beim Abwaschen von Geschirr, beim Vorbereiten von Lebensmitteln oder beim Waschen der Hände nicht der Maximaldurchfluss benötigt.

Ein geringerer Durchfluss als der Maximaldurchfluss reicht bei den meisten Anwendungen vollkommen aus.

Die erfindungsgemässe Einhebelmischarmatur erlaubt es jedoch trotzdem, im zweiten Einstellbereich, bei Bedarf, den Maximaldurchfluss freizugeben um beispielsweise eine Pfanne oder eine Wasserflasche zu füllen.

Somit kann ein schonender Umgang mit der Ressource Wasser erreicht werden.

Trotz der wassersparenden Funktionsweise besteht also für den Benutzer bei der Verwendung der erfindungsgemässen Einhebelmischarmatur die Möglichkeit, schnell den Maximaldurchfluss einzustellen. Die Einhebelmischarmatur verfügt damit über eine Boosterfunktion. Die Abflussöffnung kann entsprechend auch Boosteröffnung genannt werden.

Die erfindungsgemässe Einhebelmischarmatur ist vielseitig einsetzbar, beispielsweise auch in Grossküchen und im Nahrungsmittel-produzierenden Gewerbe.

In einer bevorzugten Ausführungsform nimmt beim Drehen des Bedienhebels, ausgehend von der Ruhestellung, in einem Kaltwasserabschnitt des ersten Einstellbereichs der Durchfluss des Kaltwassers von Null auf den Höchstdurchfluss zu. In einem daran anschliessenden Mischwasserabschnitt des ersten Einstellbereichs wird Mischwasser mit zunehmender Temperatur an den Wasserauslauf abgegeben und beim Ende des Mischwasserabschnitts wird Warmwasser an den Wasserauslauf abgegeben.

Dies hat den Vorteil, dass im ersten Abschnitt einerseits zu Beginn eine sehr geringe Wassermenge abgegeben wird und andererseits der Benutzer sich nicht verbrennt, da zu Beginn nur Kaltwasser an den Wasserauslauf abgegeben wird.

Falls der Benutzer eine wärmere Wassertemperatur als die Temperatur des Kaltwassers wünscht, so dreht er den Hebel einfach weiter im ersten Einstellbereich, bis Warm- oder Heisswasser abgeben wird.

Die Bedienung der Einhebelmischarmatur gestaltet sich durch eine solche Ausbildung sehr einfach.

Gemäss einer weiteren bevorzugten Ausführungsform entspricht der Durchfluss im Mischwasserabschnitt wenigstens annähernd dem Höchstdurchfluss.

Dies hat den Vorteil, dass nicht mehr Wasser verbraucht wird als nötig.

Im zweiten Einstellbereich nimmt bevorzugt, beim Drehen des Bedienhebels, ausgehend von der Ruhestellung, der Durchfluss des Wassers von Null auf den Maximaldurchfluss zu.

Eine vergleichsweise langsame Zunahme des Durchflusses von Null auf den Maximaldurchfluss verhindert, dass der Benutzer von einem plötzlichen Maximaldurchfluss überrascht wird und Wasser unnötig verspritzt wird. Der Maximaldurchfluss ist dennoch sehr leicht und schnell einstellbar.

Gemäss der Erfindung ist im zweiten Einstellbereich die Abflussöffnung ausschliesslich mit der Kaltwasserzuflussöffnung strömungsverbunden. Dadurch wird im zweiten Einstellbereich, also in der Boosterfunktion, Kaltwasser abgegeben. Dies dürfte in den meisten Fällen auch so gefordert sein.

Alternativ ist es aber auch möglich, im zweiten Einstellbereich die Abflussöffnung ausschliesslich mit der Warmwasserzuflussöffnung strömungsverbunden auszubilden. Dadurch wird im zweiten Einstellbereich, also in der Boosterfunktion, Warmwasser abgegeben.

Die entsprechende Konfiguration, Boosterfunktion mit Kalt- oder mit Warmwasser kann vom Installateur beim Anschluss der Einhebelmischarmatur an die Wasserversorgung gewählt werden.

In einer weiteren bevorzugten Ausführungsform weist das Armaturengehäuse einen Aufnahmeraum auf, der durch einen Zwischenboden begrenzt und in dem die Mischerpatrone angeordnet ist. Der Zwischenboden weist vier Durchlässe, einen Kaltwasserdurchlass, der mit der Kaltwasserzuflussöffnung strömungsverbunden ist und an den die Kaltwasserleitung anschliessbar ist, einen Warmwasserdurchlass, der mit der Warmwasserzuflussöffnung strömungsverbunden ist und an den die Warmwasserleitung anschliessbar ist, einen Mischwasserdurchlass, der mit der Mischwasserabflussöffnung und dem Wasserauslauf strömungsverbunden ist, und einen Abflussdurchlass der mit der Abflussöffnung und dem Wasserauslauf strömungsverbunden ist, auf.

Der Zwischenboden vereinfacht den Anschluss der Kalt- und der Warmwasserleitung.

Weiter ist es denkbar, eine fertige Einhebelmischarmatur bereitzustellen, die je eine an den Zwischenboden angeschlossene Kaltwasser- und Warmwasserleitung aufweist. So wäre es möglich, diese beiden Leitungen, die jeweils am freien Ende Kupplungen aufweisen, direkt an die Wasserversorgung anzuschliessen, ohne dass zuerst Leitungen mühsam an den Zwischenboden angeschlossen werden müssten. Dies vereinfacht die Montage erheblich.

Es können beispielsweise Innengewinde am Zwischenboden ausgebildet sein, so dass entsprechende Gewindeanschlüsse verwendet werden können um die Leitungen anzuschliessen.

Weiter hat der Zwischenboden den Vorteil, dass die Mischerpatrone bei der Montage auf den Zwischenboden aufgesetzt werden kann, ohne dass die Anschlüsse für die Leitungen an der Mischerpatrone ausgebildet werden müssen.

In der Regel wird die Mischerpatrone dabei, mittels einer Ringmutter, auf den Zwischenboden gedrückt oder gespannt. Gemäss einer weiteren bevorzugten Ausführungsform reduziert im ersten Einstellbereich die Mischerpatrone den Höchstdurchfluss gegenüber dem Maximaldurchfluss.

Eine Drosselung des Durchflusses im ersten Einstellbereich durch die Mischerpatrone hat den Vorteil, dass die Einhebelmischarmatur verhältnismässig einfach gebaut werden kann. Es muss keine Drosselwirkung am Armaturengehäuse vorgesehen werden.

Ausserdem ist ein Austausch einer defekten Mischerpatrone relativ einfach möglich.

Alternativ dazu ist es möglich, dass der Querschnitt des Mischwasserdurchlasses so ausgebildet ist, dass der Höchstdurchfluss gegenüber dem Maximaldurchfluss reduziert ist.

Dies hat den Vorteil, dass verschiedene Ausführungsformen einer Mischerpatrone zur Anwendung kommen können. Es muss nicht eine spezifische, mit einer Drosselwirkung versehene Mischerpatrone verwendet werden.

Weiter gestaltet sich die Ausbildung eines solchen Querschnitts des Mischwasserdurchlasses relativ einfach. Der Querschnitt des Mischwasserdurchlasses kann beispielsweise einfach verkleinert werden.

In einer weiteren bevorzugten Ausführungsform der Einhebelmischarmatur beträgt der Höchstdurchfluss im ersten Einstellbereich zwischen 50% bis 90%, vorzugsweise 60% bis 80%, besonders bevorzugt 70% des Maximaldurchflusses.

Der Wert des Höchstdurchflusses im Bezug auf den Maximaldurchfluss lässt sich durch entsprechende

Ausgestaltung der Mischpatrone beliebig einstellen. Der Höchstdurchfluss beträgt ungefähr 8.5 l/min, der Maximaldurchfluss ungefähr 12 l/min. Der Wert von 70% entspricht einem meist gewünschten Wert, der in der Praxis ermittelt wurde.

Gemäss einer weiteren bevorzugten Ausführungsform ist der Wasserauslauf durch eine Ausziehbrause gebildet, wobei diese Ausziehbrause über einen Brauseschlauch mit der der Mischwasserabflussöffnung und der Abflussöffnung strömungsverbunden ist.

Der Brauseschlauch erlaubt es, die Ausziehbrause bei Bedarf aus dem Armaturengehäuse herauszuziehen.

Weiter kann durch eine solche Ausbildung der Einhebelmischarmatur sowohl der Höchstwasserdurchfluss als auch der Maximalwasserdurchfluss an die Ausziehbrause abgegeben werden.

Es zeigt:
- Fig. 1: eine Draufsicht auf einen Querschnitt einer Einhebelmischarmatur entlang einer zentralen Drehachse A durch einen Wasserauslauf;
- Fig. 2: eine Draufsicht auf eine Unterseite eines Zwischenbodens mit einem Kalt- und einem Warmdurchlass;
- Fig. 3: eine Draufsicht auf eine Oberseite des Zwischenbodens mit dem Kalt-, Warm-, Mischwasser- und dem Abflussdurchlass;
- Fig. 4: eine schematische Darstellung einer Einlass- und einer Steuerscheibe einer Mischerpatrone;
- Fig. 5: eine alternative Ausführungsform der Einlass- und der Steuerscheibe der Mischerpatrone; und
- Fig. 6: eine schematische Draufsicht eines Bedienhebels mit grafisch dargestelltem Wasserdurchfluss und grafisch dargestellter Wassertemperatur, in verschiedenen Positionen des Bedienhebels.

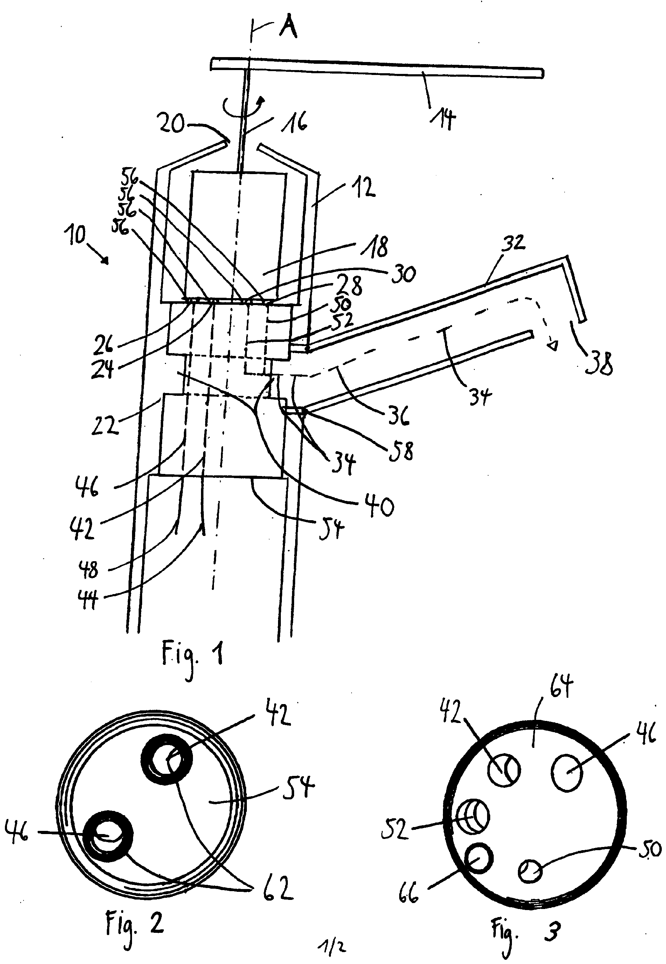

Figur 1 zeigt eine erfindungsgemässe Einhebelmischarmatur 10 mit einem Armaturengehäuse 12 und einem Bedienhebel 14, der an einem Steuerschaft 16 einer Mischerpatrone 18 befestigt ist. Der Steuerschaft 16 greift durch einen Durchlass 20 im Armaturengehäuse 12. Die Mischerpatrone 18 ist mittels einer Ringmutter (nicht gezeigt) auf einen Zwischenboden 22 runtergespannt. Die Mischerpatrone 18 weist eine Kaltwasserzuflussöffnung 24, eine Warmwasserzuflussöffnung 26, eine Mischwasserabflussöffnung 28 und eine Abflussöffnung 30 auf. Die Mischwasserabflussöffnung 28 und die Abflussöffnung 30 sind mit einem Wasserauslauf 32, gegebenenfalls über Schläuche 34 und über ein Verbindungsstück 36, strömungsverbunden. Der Wasserauslauf 32 weist eine Öffnung 38 auf, in die ein Strahlbildner eingesetzt sein kann.

Der Bedienhebel 14 lässt sich zusammen mit dem Steuerschaft 16 um eine Drehachse A, welche hier konzentrisch zur Längsachse der Einhebelmischarmatur 10 verläuft, drehen. Es ist im vorliegenden Ausführungsbeispiel nicht möglich, den Bedienhebel 14, beispielsweise um eine rechtwinklig zur Drehachse A verlaufende Schwenkachse, zu schwenken.

Der Zwischenboden 22 weist eine, im Bereich beziehungsweise auf der Höhe des Wasserauslaufs 32 angeordnete und in Richtung des Armaturengehäuses 12 offene Ringnut 40 auf. Die Ringnut 40 ist ungefähr 5mm tief und verläuft entlang der Umfangsrichtung des Zwischenbodens 22. Weiter weist der Zwischenboden 22 vier Durchlässe auf, einen Kaltwasserdurchlass 42, der mit der Kaltwasserzuflussöffnung 24 strömungsverbunden und an dem eine Kaltwasserleitung 44 anschliessbar ist, einen Warmwasserdurchlass 46, der mit der Warmwasserzuflussöffnung 26 strömungsverbunden und an den eine Warmwasserleitung 48 anschliessbar ist, einen Mischwasserdurchlass 50, der mit der Mischwasserabflussöffnung 28 und dem Wasserauslauf 32 strömungsverbunden ist und einen Abflussdurchlass 52 der mit der Abflussöffnung 30 und dem Wasserauslauf 32 strömungsverbunden ist. Der Mischwasserdurchlass 50 und der Abflussdurchlass 52 münden in die Ringnut 40 des Zwischenbodens 22 und sind dort gegebenenfalls an die Schläuche 34 angeschlossen, beispielsweise mittels bekannter Schraubanschlüsse. Die Kaltwasserleitung 44 und die Warmwasserleitung 48 sind an einer Unterseite 54 des Zwischenbodens 22 angeschlossen, beispielsweise mittels bekannter Schraubanschlüsse.

Der Zwischenboden 22 ist im Armaturengehäuse 12 eingeschraubt, kann aber auch in bekannter Art und Weise eingespannt oder einstückig mit dem Armaturengehäuse 12 gegossen sein. Zwischen der Kaltwasserzufluss- 24, der Warmwasserzufluss- 26, der Mischwasserabfluss- 28 und der Abflussöffnung 30 sind Dichtungen 56 angeordnet.

Der Wasserauslauf 32 ist in das Armaturengehäuse 12 eingeschraubt und mittels einer Wasserauslaufdichtung 58 abgedichtet.

Figur 2 zeigt eine Draufsicht auf die Unterseite 54 des Zwischenbodens 22 mit dem Kaltwasserdurchlass 42 und dem Warmwasserdurchlass 46. Die beiden Gewinde 62 für den Anschluss der Kaltwasserleitung 44 und der Warmwasserleitung 48 sind ebenfalls gut sichtbar.

Figur 3 zeigt eine Draufsicht auf eine Oberseite 64 des Zwischenbodens 22 mit dem Kaltwasserdurchlass 42, dem Warmwasserdurchlass 46, dem Mischwasserdurchlass 50 und dem Abflussdurchlass 52. Eine Positionierbohrung 66 dient zur richtigen Positionierung der Mischerpatrone 18 auf dem Zwischenboden 22, mit ihr kommt ein Positioniernocken der Mischerpatrone 18 in Eingriff.

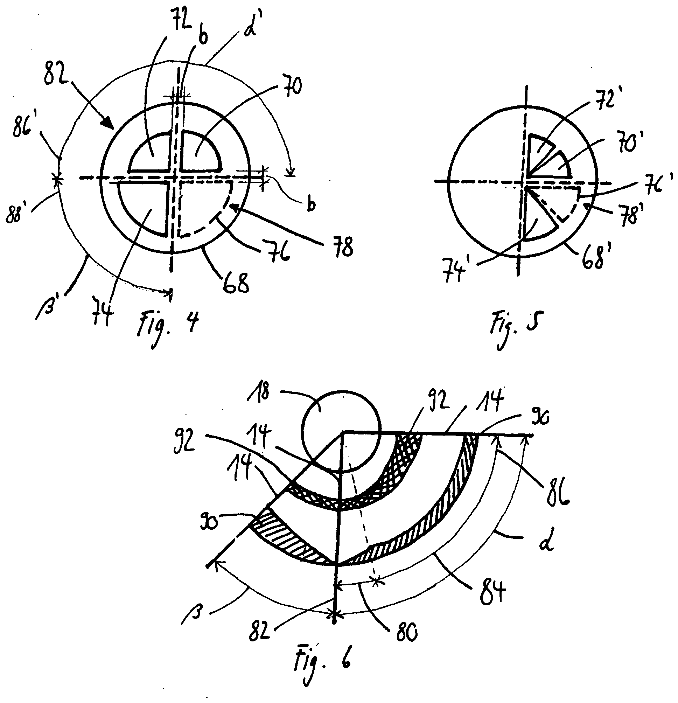

In Figur 4 ist schematisch eine stationäre Einlassscheibe 68 der Mischerpatrone 18 mit einer Kaltwassereinlassöffnung 70, einer Warmwassereinlassöffnung 72, und einer Boostereinlassöffnung 74, gezeigt. Diese Öffnungen 70, 72, 74 sind als Viertelkreissektoren ausgebildet und jeweils in einem Abstand b voneinander angeordnet. Die Kaltwassereinlassöffnung 70 ist mit der Kaltwasserzuflussöffnung 24 strömungsverbunden, die Warmwassereinlassöffnung 72 ist mit der Warmwasserzuflussöffnung 26 strömungsverbunden und die Boostereinlassöffnung 74 ist mit der Kaltwasserzuflussöffnung 24 oder der Warmwasserzuflussöffnung 26, entsprechend dem Anschluss der Warm- 48 beziehungsweise Kaltwasserleitung 44, strömungsverbunden. Die Mischwasserabflussöffnung 28 und die Abflussöffnung 30, beziehungsweise entsprechende Öffnungen in der Einlassscheibe 68, sind nicht gezeigt.

Der Querschnitt der Kaltwassereinlassöffnung 70 und der Warmwassereinlassöffnung 72 ist kleiner als der Querschnitt der Boostereinlassöffnung 74.

Gestrichelt gezeigt ist eine Steueröffnung 76 in einer Steuerscheibe 78 der Mischerpatrone 18. Die Steuerscheibe 78 liegt an die Einlassscheibe 68 dichtend an und ist gegenüber dieser um die Drehachse A drehbar. Die Form und Grösse der Steueröffnung 76 entspricht hier jener der Boostereinlassöffnung 74. Sie befindet sich, in Ausschaltstellung im öffnungsfreien Quadranten der Einlassscheibe 68. Wird die Steuerscheibe 78 beziehungsweise die Steueröffnung 76 über den Steuerschaft 16 der Mischerpatrone 18 und somit über den Bedienhebel 14, in einem ersten Einstellbereich α' bewegt, kommt deren Steueröffnung 76 mindestens teilweise in Deckung mit der Kaltwassereinlassöffnung 70 beziehungsweise der Warmwassereinlassöffnung 72. Dadurch wird, in einem Kaltwasserabschnitt 80 (siehe auch Figur 6), Kaltwasser an die Mischwasserabflussöffnung 28 abgeben. Der Durchfluss nimmt im Kaltwasserabschnitt 80, ausgehend von der Ruhestellung 82 (siehe Figur 6), von Null auf einen Höchstdurchfluss zu. In einem an den Kaltwasserabschnitt 80 angrenzenden Mischwasserabschnitt 84 (siehe Figur 6) des ersten Einstellbereichs α' wird Mischwasser mit zunehmender Temperatur an den Wasserauslauf 32 abgegeben, wobei beim Ende 86, 86' des Mischwasserabschnitts 84 nur Warmwasser an den Wasserauslauf 32 abgegeben wird. Im Mischwasserabschnitt 84 entspricht der Durchfluss wenigstens annähernd dem Höchstdurchfluss.

Wird die Steueröffnung 76 durch Drehen der Steuerscheibe 78 über den Steuerschaft 16 der Mischerpatrone 18 und somit über den Bedienhebel 14, in einem zweiten Einstellbereich β' bewegt, kommt diese mindestens teilweise in Deckung mit der Boostereinlassöffnung 74. Dadurch wird ausschliesslich Kaltwasser oder ausschliesslich Warmwasser, entsprechend der gewählten Ausbildung des Wasseranschlusses der Kaltwasser- 44 und Warmwasserleitung 48, über die Abflussöffnung 30 an den Wasserauslauf 32 abgegeben. Der Durchfluss nimmt dabei im zweiten Einstellbereich β/β', ausgehend von der Ruhestellung 82, von Null auf den Maximaldurchfluss zu. Diese Einstellung entspricht einer Boosterfunktion. Bei der vorliegenden Ausführungsform (Figur 6) nimmt, im zweiten Einstellbereich β/β', der Durchfluss des Wassers von Null auf den Maximaldurchfluss kontinuierlich zu. Es ist jedoch auch denkbar die Einhebelmischarmatur 10 so auszubilden, dass in einem Endbereich der Durchfluss wenigstens annähernd konstant ist und dem Maximaldurchfluss entspricht. Dies ist jedoch bei der vorliegenden Ausführungsform nicht der Fall.

Der Drehwinkelbereich erstreckt sich bei der in Figur 4 gezeigten Ausführungsform der Mischerpatrone 18 auf 270°.

Es ist denkbar, diesen Drehwinkelbereich anzupassen. So ist in Figur 5 eine Einlassscheibe 68' mit einer Kaltwassereinlassöffnung 70', einer Warmwassereinlassöffnung 72' und einer Boostereinlassöffnung 74' gezeigt. Die Kaltwassereinlassöffnung 70' ist wiederum mit der Kaltwasserzuflussöffnung 24 strömungsverbunden, die Warmwassereinlassöffnung 72' wiederum mit der Warmwasserzuflussöffnung 26 strömungsverbunden und die Boostereinlassöffnung 74' ist wiederum mit der Kaltwasserzuflussöffnung 24 oder der Warmwasserzuflussöffnung 26, entsprechend dem Anschluss der Warm- 48 beziehungsweise Kaltwasserleitung 44, strömungsverbunden. Wiederum gestrichelt ist die Steueröffnung 76' der Steuerscheibe 78' gezeigt. Der Unterschied zur in Figur 4 gezeigten Ausführungsform liegt darin, dass die Öffnungen 70', 72', 74', 76' in einem Bereich von einem Drehwinkel von 180° angeordnet sind. Die Öffnungen in der Einlass- 68 und der Steuerscheibe 78 der Mischerpatrone 18 können also jeweils angepasst werden.

Figur 6 zeigt rein schematisch eine Draufsicht auf den Bedienhebel 14 und die Mischerpatrone 18, wobei der Bedienhebel 14 in verschiedenen Stellungen gezeigt ist. Zwischen dem ersten Einstellbereich α und dem zweiten Einstellbereich β befindet sich der Bedienhebel 14 in der Ruhestellung 82, dabei befindet sich die Steueröffnung 76 in der in den Figuren 4 und 5 gestrichelt angedeuteten Stellung.

Wird der Bedienhebel 14 im Uhrzeigersinn, ausgehend von der Ruhestellung 82 im zweiten Einstellbereich β gedreht, wird die Boosterfunktion aktiviert. Das heisst, der Durchfluss des Wassers nimmt von Null (Ruhestellung) bis zum Maximalwert zu indem die Steueröffnung 76, 76' immer mehr mit der Boostereinlassöffnung 74, 74' in Überlappung gelangt.

Die Durchflussmenge 90 ist grafisch mit der schräg-schraffierten Fläche, in Abhängigkeit von der Drehposition des Bedienhebels 14, gezeigt. In dem Endbereich 88 bleibt der Durchfluss konstant und entspricht dort dem Maximaldurchfluss.

Die Wassertemperatur 92 ist mit der gekreuzt-schraffierten Fläche in Abhängigkeit der Drehposition des Bedienhebels 14, gezeigt. Im zweiten Einstellbereich β wird im gezeigten Ausführungsbeispiel Kaltwasser durch den Wasserauslauf 32 abgegeben. Wie erwähnt kann dies auch Warmwasser sein.

Wird der Bedienhebel 14 im Gegenuhrzeigersinn, ausgehend von der Ruhestellung 82, in den ersten Einstellbereich α gedreht, so wird eine Wassersparfunktion aktiviert. Das heisst, dass der Durchfluss des Wassers im Kaltwasserabschnitt 80 von Null (Ruhestellung) auf den Höchstdurchfluss zunimmt, durch zunehmende Überlappung der Steueröffnung 76, 76' mit der Kaltwassereinlassöffnung 70, 70'. Dieser Höchstdurchfluss beträgt hier ungefähr 70% des Maximaldurchfluss.

Wird der Bedienhebel 14 in den Mischwasserabschnitt 84 weitergedreht, so bleibt der Durchfluss konstant und entspricht wenigstens annähernd dem Höchstdurchfluss. Die Durchflussmenge 90 ist auch in diesem ersten Einstellbereich α, grafisch mit der schräg-schraffierten Fläche in Abhängigkeit von der Drehposition des Bedienhebels 14, gezeigt. Die Wassertemperatur 92 des durch den Wasserauslauf 32 austretenden Wassers ist im Kaltwasserabschnitt 80 konstant und nimmt im Mischwasserabschnitt 84 - durch Zunahme der Überlappung der Steueröffnung 76, 76' mit der Warmwassereinlassöffnung 72, 72' und gleichzeitiger Abnahme der Überlappung mit der Kaltwassereinlassöffnung 70, 70' - zu, bis sie beim Ende 86 des Mischwasserabschnitts 84 der Warmwassertemperatur des Warmwassers aus der Wasserversorgung entspricht; dabei ist die Steueröffnung 78, 78' ausser Überlappung mit der Kaltwassereinlassöffnung 70, 70' und in Deckung mit der Warmwassereinlassöffnung 72, 72'. Die Wassertemperatur 92 ist wiederum mit der gekreuzt-schraffierten Fläche, in Abhängigkeit von der Drehposition des Bedienhebels 14, gezeigt.

Der Drehwinkelbereich des Bedienhebels 14 der Einhebelmischarmatur 10 kann durch ein Getriebe beliebig angepasst werden. Zwischen der Ausführungsform der Mischerpatrone 18 gemäss Figur 4 und dem Bedienhebel 14 der Ausführungsform gemäss Figur 6 kommt beispielsweise ein Getriebe mit der Übersetzung 1:2 zum Einsatz; zwischen der Ausführungsform der Mischerpatrone 18 gemäss Figur 5 und dem Bedienhebel 14 der Ausführungsform gemäss Figur 6 beispielsweise ein Getriebe mit der Übersetzung 3:4.

Die Einhebelmischarmatur 10 weist im Bereich der Ruhestellung 82 einen Widerstand auf, der bei der Bedienung der Einhebelmischarmatur 10 überwunden werden muss. Der Bedienhebel 14 rastet also in der Ruhestellung 82 ein und kann mit einem vergleichsweise geringen Kraftaufwand aus der Ruhestellung 82 herausgedreht beziehungsweise in die Ruhestellung 82 eingeschnappt werden. Dieser Widerstand kann auf bekannte Art und Weise an der Einhebelmischarmatur 10 ausgebildet werden.

Alternativ ist es auch möglich den Bedienhebel 14 als Schwenkhebel auszubilden und mit einer entsprechend angepassten Konstruktion an den Steuerschaft 16 der Mischerpatrone 18 anzuschliessen.

Von der Steueröffnung 76,76' wird das Wasser mittels einer weiteren Scheibe, die oberhalb der Steuerscheibe 78 angeordnet ist, je nach Stellung der Steuerscheibe 78, an die Mischwasserabflussöffnung 28 beziehungsweise an die Abflussöffnung 30 geleitet. Diese weitere Scheibe weist somit Ausnehmungen auf, mittels deren die Steueröffnung 76,76', über hier nicht gezeigte Durchlässe in der Einlass- 68 und der Steuerscheibe 78, je nach Stellung der Steuerscheibe 78, mit der Mischwasserabflussöffnung 28 beziehungsweise der Abflussöffnung 30 strömungsverbunden werden kann. Der Übersicht halber sind diese Durchlässe sowie die weitere Scheibe in den Figuren 4 und 5 nicht gezeigt.

## Patentansprüche

1. Einhebelmischarmatur mit einem Armaturengehäuse (12), einer im Armaturengehäuse (12) eingesetzten, mittels eines Bedienhebels (14), welcher ausgehend von einer Ruhestellung (82) in Richtung eines ersten Einstellbereichs (α) und in Richtung eines zweiten Einstellbereichs (β) um eine Drehachse (A) drehbar ist, steuerbaren Mischerpatrone (18) mit einer Warmwasserzuflussöffnung (26), an die eine Warmwasserleitung (48) anschliessbar ist, einer Kaltwasserzuflussöffnung (24), an die eine Kaltwasserleitung (44) anschliessbar ist, einer Mischwasserabflussöffnung (28) und einer Abflussöffnung (30), wobei beim Drehen des Bedienhebels (14) im ersten Einstellbereich (α) Mischwasser über die Mischwasserabflussöffnung (28) abgegeben wird, und wobei beim Drehen des Bedienhebels (14) im zweiten Einstellbereich (β) der Durchfluss des durch die Abflussöffnung (30) fliessenden Wassers bis zu einem Maximaldurchfluss regulierbar ist und beim Drehen des Bedienhebels (14) im ersten Einstellbereich (α) der Höchstdurchfluss des durch die Mischwasserabflussöffnung (28) in einen Wasserauslauf (32) fliessenden Mischwassers gegenüber dem Maximaldurchfluss reduziert ist,
**dadurch gekennzeichnet, dass**
die Mischwasserabflussöffnung (28) und die Abflussöffnung (30) mit dem Wasserauslauf (32) strömungsverbunden sind, und
im zweiten Einstellbereich (β) die Abflussöffnung (30) ausschliesslich entweder mit der Kaltwasserzuflussöffnung (24) oder der Warmwasserzuflussöffnung (26) strömungsverbunden ist.

2. Einhebelmischarmatur gemäss Anspruch 1, **dadurch gekennzeichnet, dass** beim Drehen des Bedienhebels (14), ausgehend von der Ruhestellung (82), in einem Kaltwasserabschnitt (80) des ersten Einstellbereichs (α) der Durchfluss des Kaltwassers von Null auf den Höchstdurchfluss zunimmt, in einem daran anschliessenden Mischwasserabschnitt (84) des ersten Einstellbereichs (α) Mischwasser mit zunehmender Temperatur an den Wasserauslauf (32) abgegeben wird und beim Ende des Mischwasserabschnitts (84) Warmwasser an den Wasserauslauf (32) abgegeben wird.

3. Einhebelmischarmatur gemäss Anspruch 1 oder 2, **dadurch gekennzeichnet, dass** im Mischwasserabschnitt (84) der Durchfluss wenigstens annähernd dem Höchstdurchfluss entspricht.

4. Einhebelmischarmatur gemäss einem der Ansprüche 1 bis 3, **dadurch gekennzeichnet, dass** beim Drehen des Bedienhebels (14), ausgehend von der Ruhestellung (82), im zweiten Einstellbereich (β) der Durchfluss des Wassers von Null auf den Maximaldurchfluss zunimmt.

5. Einhebelmischarmatur gemäss einem der Ansprüche 1 bis 4, **dadurch gekennzeichnet, dass** das Armaturengehäuse (12) einen Aufnahmeraum aufweist, der durch einen Zwischenboden (22) begrenzt und in dem die Mischerpatrone (18) angeordnet ist, wobei der Zwischenboden (22) vier Durchlässe, einen Kaltwasserdurchlass (42), der mit der Kaltwasserzuflussöffnung (24) strömungsverbunden und an dem die Kaltwasserleitung (44) anschliessbar ist, einen Warmwasserdurchlass (46), der mit der Warmwasserzuflussöffnung (26) strömungsverbunden und an den die Warmwasserleitung (48) anschliessbar ist, einen Mischwasserdurchlass (50), der mit der Mischwasserabflussöffnung (28) und dem Wasserauslauf (32) strömungsverbunden ist und einen Abflussdurchlass (52), der mit der Abflussöffnung (30) und dem Wasserauslauf (32) strömungsverbunden ist, aufweist.

6. Einhebelmischarmatur gemäss einem der Ansprüche 1 bis 5, **dadurch gekennzeichnet, dass** im ersten Einstellbereich die Mischerpatrone (18) den Höchstdurchfluss gegenüber dem Maximaldurchfluss reduziert.

7. Einhebelmischarmatur gemäss Anspruch 5, **dadurch gekennzeichnet, dass** der Querschnitt des Mischwasserdurchlasses (50) so ausgebildet ist, dass der Höchstdurchfluss gegenüber dem Maximaldurchfluss reduziert ist.

8. Einhebelmischarmatur gemäss einem der Ansprüche 1 bis 7, **dadurch gekennzeichnet, dass** der Höchstdurchfluss im ersten Einstellbereich (α) zwischen 50% bis 90%, vorzugsweise 60% bis 80%, besonders bevorzugt 70% des Maximaldurchflusses beträgt.

9. Einhebelmischarmatur gemäss einem der Ansprüche 1 bis 8, **dadurch gekennzeichnet, dass** der Wasserauslauf (32) durch eine Ausziehbrause gebildet ist und diese über einen Brauseschlauch mit der Mischwasserabflussöffnung (28) und mit der Abflussöffnung (30) strömungsverbunden ist.

## Claims

1. Single-lever mixer tap having a tap housing (12), a mixer cartridge (18) which is installed in the tap housing (12) and is controllable by means of an operating lever (14) which, starting from a rest position (82) is rotatable about a pivot axis (A) in the direction of a first adjustment range (α) and in the direction of a second adjustment range (β), with a hot water inlet opening (26) to which a hot water pipe (48) is connectible, a cold water inlet opening (24) to which a cold water pipe (44) is connectible, a mixed water outlet opening (28) and an outlet opening (30), wherein, on rotation of the operating lever (14) in the first adjustment range (α), mixed water is delivered via the mixed water outlet opening (28), and wherein, on rotation of the operating lever (14) in the second adjustment range (β), the flow rate of the water flowing through the outlet opening (30) is adjustable up to a maximum flow rate and, on rotation of the operating lever (14) in the first adjustment range (α), the highest flow rate of the mixed water flowing through the mixed water outlet opening (28) to a spout (32) is reduced in comparison with the maximum flow rate,
**characterised in that**
the mixed water outlet opening (28) and the outlet opening (30) are fluidically connected to the spout (32), and
in the second adjustment range (β) the outlet opening (30) is fluidically connected exclusively either to the cold water inlet opening (24) or to the hot water inlet opening (26).

2. Single-lever mixer tap according to claim 1, **characterised in that** on rotation of the operating lever (14), starting from the rest position (82), in a cold water sector (80) of the first adjustment range (α) the flow rate of the cold water increases from zero to the highest flow rate, in an adjoining mixed water sector (84) of the first adjustment range (α) mixed water of increasing temperature is delivered to the spout (32) and at the end of the mixed water sector (84) hot water is delivered to the spout (32).

3. Single-lever mixer tap according to claim 1 or 2, **characterised in that** in the mixed water sector (84) the flow rate corresponds at least approximately to the highest flow rate.

4. Single-lever mixer tap according to any one of claims 1 to 3, **characterised in that** on rotation of the operating lever (14), starting from the rest position (82), in the second adjustment range (β) the flow rate of the water increases from zero to the maximum flow rate.

5. Single-lever mixer tap according to any one of claims 1 to 4, **characterised in that** the tap housing (12) has a receiving space which is bounded by an intermediate base (22) and in which the mixer cartridge (18) is arranged, the intermediate base (22) having four conduits, a cold water conduit (42) which is fluidically connected to the cold water inlet opening (24) and to which to the cold water pipe (44) is connectible; a hot water conduit (46) which is fluidically connected to the hot water inlet opening (26) and to which the hot water pipe (48) is connectible; a mixed water conduit (50) which is fluidically connected to the mixed water outlet opening (28) and the spout (32); and an outlet conduit (52) which is fluidically connected to the outlet opening (30) and the spout (32).

6. Single-lever mixer tap according to any one of claims 1 to 5, **characterised in that** in the first adjustment range the mixer cartridge (18) reduces the highest flow rate relative to the maximum flow rate.

7. Single-lever mixer tap according to claim 5, **characterised in that** the cross-section of the mixed water conduit (50) is such that the highest flow rate is reduced in comparison with the maximum flow rate.

8. Single-lever mixer tap according to any one of claims 1 to 7, **characterised in that** the highest flow rate in the first adjustment range (α) is between 50 % and 90 %, preferably from 60 % to 80 %, especially preferably 70 %, of the maximum flow rate.

9. Single-lever mixer tap according to any one of claims 1 to 8, **characterised in that** the spout (32) is formed by a pull-out spray and the latter is fluidically connected via a spray hose to the mixed water outlet opening (28) and to the outlet opening (30).

## Revendications

1. Mitigeur monocommande comprenant un carter (12) et une cartouche de mitigeage (18) intégrée dans ledit carter (12) du mitigeur, qui peut être commandée au moyen d'un levier d'actionnement (14) pouvant tourner autour d'un axe de rotation (A), à partir d'une position de repos (82), en direction d'une première plage de réglage (α) et en direction d'une seconde plage de réglage (β), et est pourvue d'un orifice (26) d'afflux d'eau chaude auquel un conduit d'eau chaude (48) peut être raccordé, d'un orifice (24) d'afflux d'eau froide auquel un conduit d'eau froide (44) peut être raccordé, d'un orifice (28) de sortie d'eau mitigée, et d'un orifice de décharge (30), sachant que, lors de la rotation du levier d'actionnement (14) dans la première plage de réglage (α), de l'eau mitigée est délivrée en empruntant l'orifice (28) de sortie d'eau mitigée ; que, lors de la rotation dudit levier d'actionnement (14) dans la seconde plage de réglage (β), le débit de l'eau, s'écoulant en empruntant l'orifice de décharge (30), peut être régulé jusqu'à un débit maximal ; et que, lors de la rotation dudit levier d'actionnement (14) dans ladite première plage de réglage (α), le flux maximal de l'eau mitigée, s'écoulant vers une sortie d'eau (32) en empruntant ledit orifice (28) de sortie d'eau mitigée, est réduit par rapport audit débit maximal,
**caractérisé par le fait**
**que** l'orifice (28) de sortie d'eau mitigée et l'orifice de décharge (30) sont en liaison d'écoulement avec la sortie d'eau (32), et
**que**, dans la seconde plage de réglage (β), ledit orifice de décharge (30) est exclusivement en liaison d'écoulement soit avec l'orifice (24) d'afflux d'eau froide, soit avec l'orifice (26) d'afflux d'eau chaude.

2. Mitigeur monocommande selon la revendication 1, **caractérisé par le fait que**, lors de la rotation du levier d'actionnement (14) à partir de la position de repos (82), le débit de l'eau froide augmente de zéro jusqu'au flux maximal dans un secteur d'eau froide (80) de la première plage de réglage (α) ; de l'eau mitigée est délivrée à la sortie d'eau (32), avec température croissante, dans un secteur attenant d'eau mitigée (84) de ladite première plage de réglage (α) ; et de l'eau chaude est délivrée à ladite sortie d'eau (32) à la fin dudit secteur d'eau mitigée (84).

3. Mitigeur monocommande selon la revendication 1 ou 2, **caractérisé par le fait que** le débit correspond, au moins approximativement, au flux maximal dans le secteur d'eau mitigée (84).

4. Mitigeur monocommande selon l'une des revendications 1 à 3, **caractérisé par le fait que**, lors de la rotation du levier d'actionnement (14) à partir de la position de repos (82), le débit de l'eau augmente de zéro jusqu'au débit maximal dans la seconde plage de réglage (β).

5. Mitigeur monocommande selon l'une des revendications 1 à 4, **caractérisé par le fait que** le carter (12) dudit mitigeur est doté d'un logement délimité par un fond intermédiaire (22) et renfermant la cartouche de mitigeage (18), ledit fond intermédiaire (22) comprenant quatre passages, un passage d'eau froide (42) qui est en liaison d'écoulement avec l'orifice (24) d'afflux d'eau froide, et auquel le conduit d'eau froide (44) peut être raccordé ; un passage d'eau chaude (46) qui est en liaison d'écoulement avec l'orifice (26) d'afflux d'eau chaude, et auquel le conduit d'eau chaude (48) peut être raccordé ; un passage d'eau mitigée (50), en liaison d'écoulement avec l'orifice (28) de sortie d'eau mitigée et avec la sortie d'eau (32) ; et un passage de décharge (52), en liaison d'écoulement avec l'orifice de décharge (30) et avec ladite sortie d'eau (32).

6. Mitigeur monocommande selon l'une des revendications 1 à 5, **caractérisé par le fait que**, dans la première plage de réglage, la cartouche de mitigeage (18) réduit le flux maximal par rapport au débit maximal.

7. Mitigeur monocommande selon la revendication 5, **caractérisé par le fait que** la section transversale du passage d'eau mitigée (50) est conçue de façon telle que le flux maximal soit réduit par rapport au débit maximal.

8. Mitigeur monocommande selon l'une des revendications 1 à 7, **caractérisé par le fait que** le flux maximal représente de 50 % à 90 %, préférentiellement de 60 % à 80 %, avec préférence particulière 70 % du débit maximal dans la première plage de réglage (α).

9. Mitigeur monocommande selon l'une des revendications 1 à 8, **caractérisé par le fait que** la sortie d'eau (32) est constituée d'une douchette extractible et cette dernière est en liaison d'écoulement, par l'intermédiaire d'un flexible de douche, avec l'orifice (28) de sortie d'eau mitigée et avec l'orifice de décharge (30).
